## Europäisches Patentamt

## European Patent Office

## Office européen des brevets

(19)

(11) Veröffentlichungsnummer: **0 110 217**
**B1**

(12) **EUROPÄISCHE PATENTSCHRIFT**

(45) Veröffentlichungstag der Patentschrift:
**24.08.88**

(21) Anmeldenummer: **83111263.6**

(22) Anmeldetag: **11.11.83**

(51) Int. Cl.⁴: **B 60 T 8/00,** B 60 T 13/14,
B 60 T 17/18

(54) **Hydraulisches Fahrzeugbremssystem.**

(30) Priorität: **26.11.82 DE 3243789**
**09.03.83 DE 3308281**
**04.11.83 DE 3339901**

(43) Veröffentlichungstag der Anmeldung:
**13.06.84 Patentblatt 84/24**

(45) Bekanntmachung des Hinweises auf die Patenterteilung:
**24.08.88 Patentblatt 88/34**

(84) Benannte Vertragsstaaten:
**CH DE FR IT LI SE**

(56) Entgegenhaltungen:
**FR - A - 1 544 007**
**FR - A - 2 482 916**
**GB - A - 2 022 738**
**GB - A - 2 106 605**
**US - A - 3 706 479**
**US - A - 3 874 742**
**US - A - 3 880 476**
**US - A - 3 883 183**
**US - A - 4 046 426**
**US - A - 4 143 514**

(73) Patentinhaber: **ROBERT BOSCH GMBH, Postfach 50,
D-7000 Stuttgart 1 (DE)**

(72) Erfinder: **Leiber, Heinz, Theodor-Heuss-Strasse 34,
D-7141 Oberriexingen (DE)**

## Beschreibung

Die Erfindung betrifft ein hydraulisches Fahrzeugbremssystem mit den Merkmalen des Oberbegriffs des Anspruches 1.

Ein derartiges Fahrzeugbremssystem ist z.B. aus der SE-A-8 205 334, Publ. Nr. SE-A-448 290 bekannt. bei dieser bekannten Bauart ist zwischen den beiden Bremskreisen ein Druckfühler vorgesehen, der bei ungleichen Drücken in den Bremskreisen anspricht. Daraufhin wird ein Magnetventil angesteuert, das Druck aus einem mit Bremsventildruck beschickten Kreis in den Bremskreis mit dem niedrigeren Druck gelangen lässt. Die Überwachung der einzelnen Betriebszustände des Bremssystems mit dieser bekannten Einrichtung ist aber für manche Betriebsbedingungen nicht ausreichend.

Der Erfindung liegt die Aufgabe zugrunde, diesen Nachteil zu vermeiden und ein hydraulisches Fahrzeugbremssystem der eingangs genannten Art zu schaffen, das die einzelnen Betriebszustände, wie die Arbeit des Blockierschutzes und die Pedalstellung und den Bremsflüssigkeitsstand und den Bremsventildruck aufeinander abstimmt.

Diese Aufgabe wird gemäss der Erfindung bei dem gattungsgemässen Fahrzeugbremssystem durch die kennzeichnenden Merkmale des Patentanspruchs gelöst.

Weiterbildungen und deren Vorteile werden im Zusammenhang mit den Ausführungsbeispielen der Zeichnung erläutert.

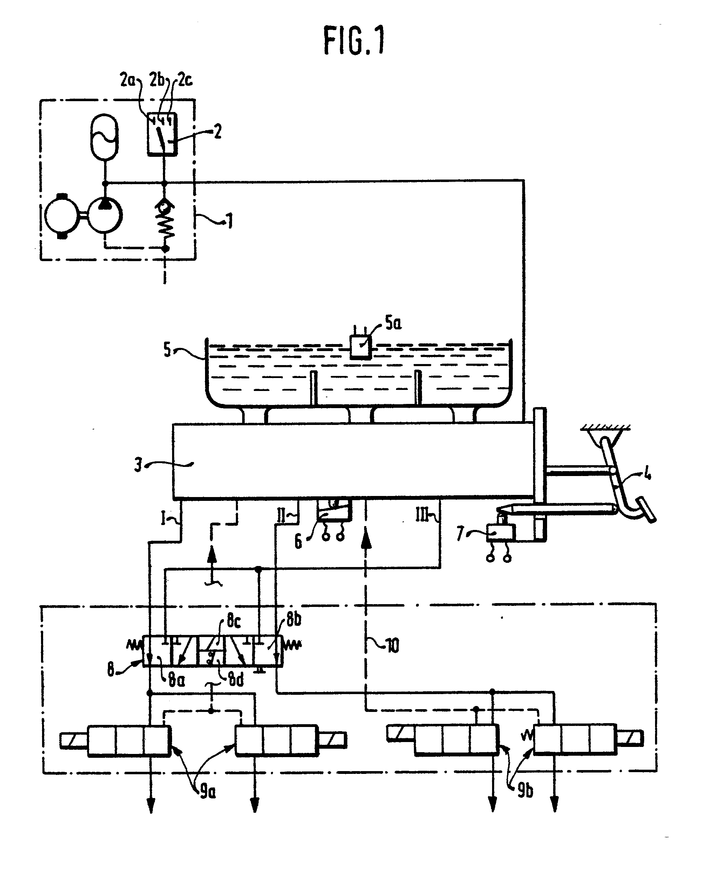

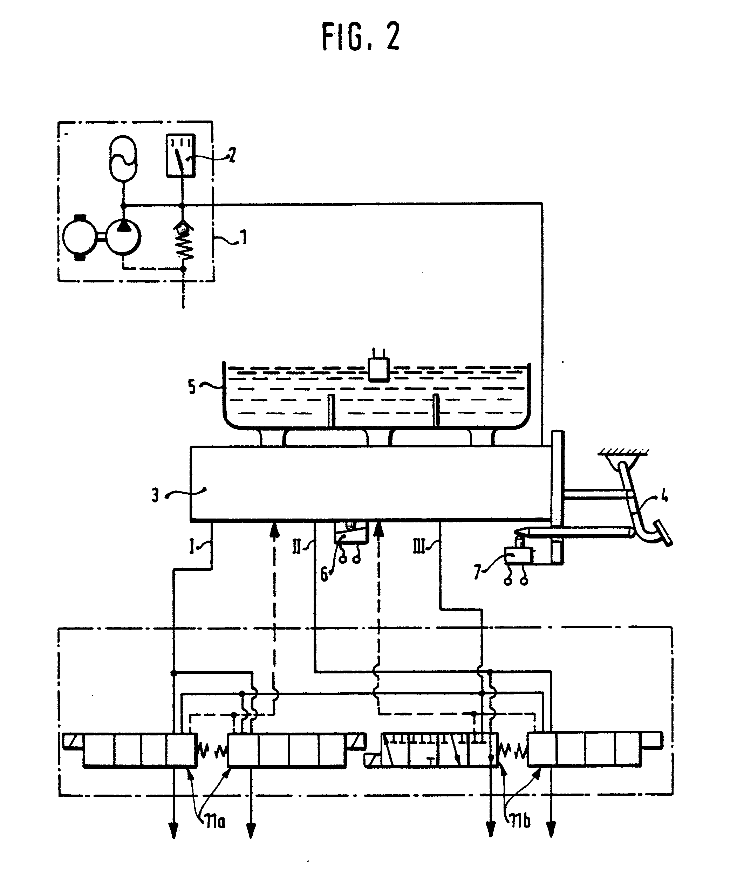

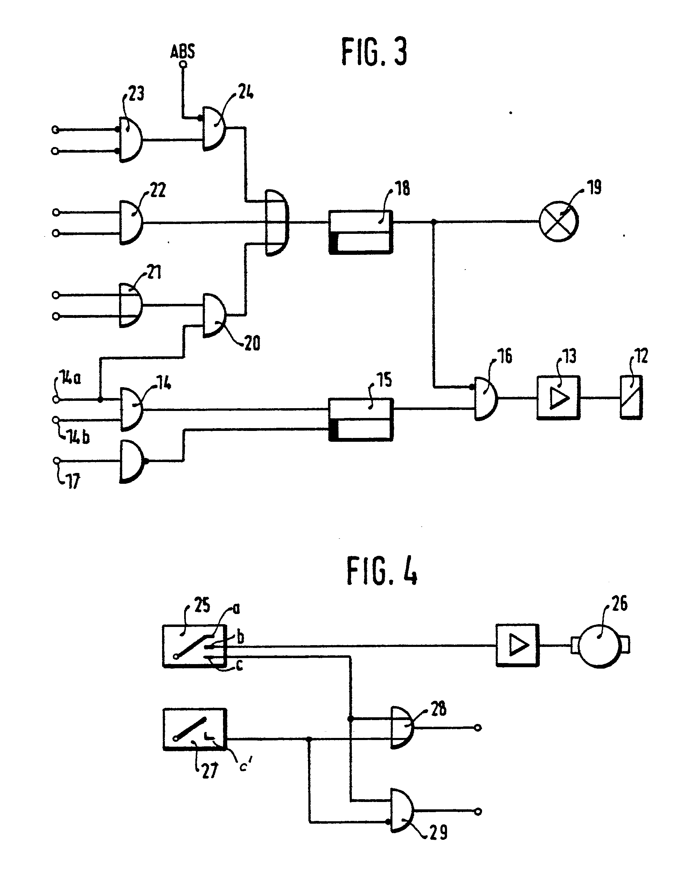

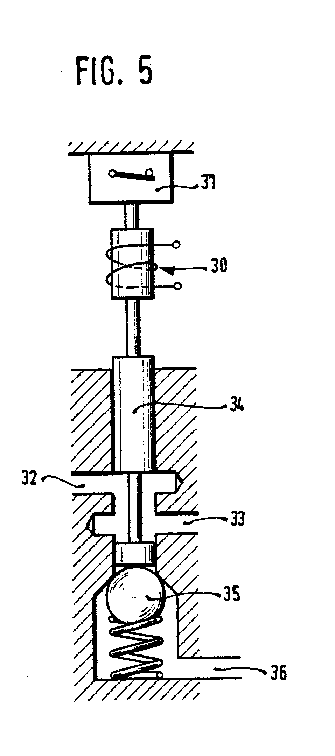

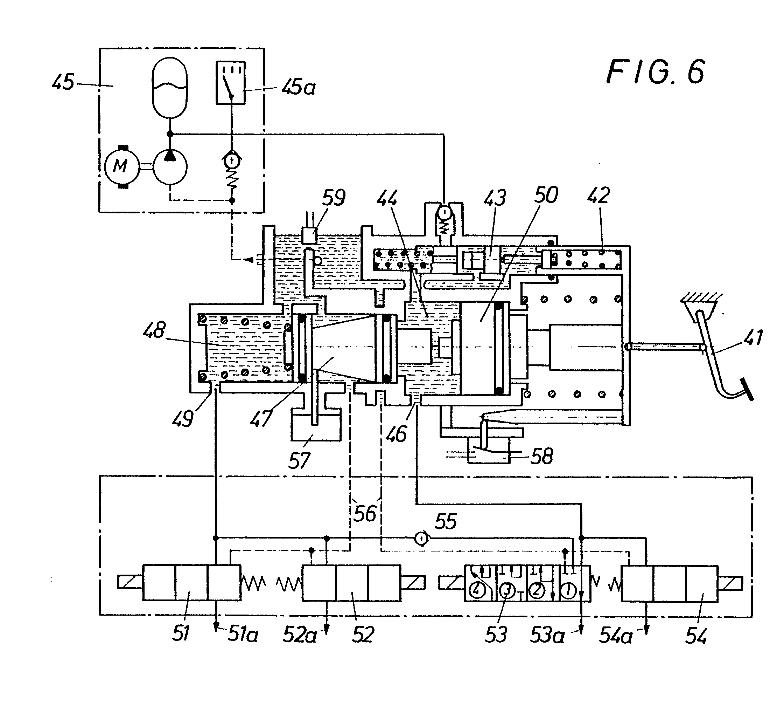

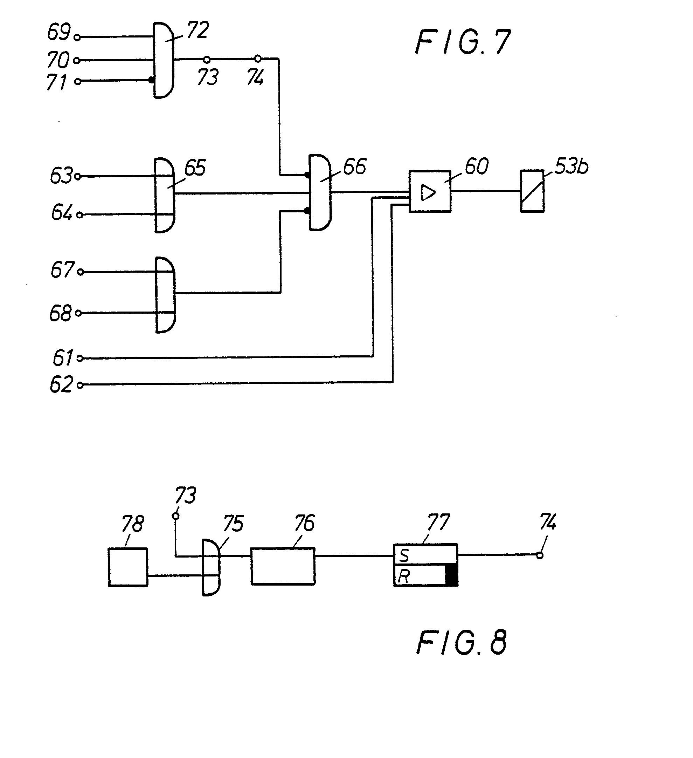

Es zeigen: Figur 1 eine erste Möglichkeit für den Aufbau des hydraulischen Fahrzeugbremssystems, Figur 2 eine zweite Möglichkeit für diesen Aufbau, Figur 3 eine Ansteuerschaltung für die zusätzliche Ventilanordnung, Figur 4 eine mögliche Ergänzung der Schaltung der Figur 3, Figur 5 ein Ventil, wie es vorzugsweise bei der Erfindung als Umschaltventil verwendet werden kann, Figur 6 ein erstes Ausführungsbeispiel unter Verwendung eines 4/4-Ventils, Figur 7 eine Ansteuerschaltung für das Mehrstellungsventil der Figur 6 und Figur 8 eine Erweiterungsmöglichkeit für die Ausgestaltung der Figur 7.

In Figur 1 ist mit 1 eine Druckversorgung bezeichnet, die einen Druckschalter 2 enthält, der drei unterschiedliche Schaltstellungen 2a bis c aufweist. 3 ist ein bekannter Bremskraftverstärker, mit zwei Hauptbremszylindern, die mit dem über ein Bremspedal 4 und mittels eines davon betätigten Bremsventil erzeugten, von dem Druck der Druckversorgung abgeleiteten Druck beaufschlagt werden. Die Ausgänge der beiden Hauptbremszylinder sind mit I und II bezeichnet, eine Herausführung aus der Steuerkammer für den Hauptbremszylinder mit dem Ausgang II und III. Am Ausgang III steht also der mittels des Bremsventils erzeugte Druck an. Ein Vorratsbehälter mit Bremsflüssigkeit trägt das Bezugszeichen 5. Er ist in der Ausgangsstellung der Kolben der Hauptbremszylinder mit den Zylindern verbunden und bei nicht betätigtem Bremsventil auch mit der Steuerkammer. Über einen Schalter 6 wird angezeigt, wenn der zum Ausgang I gehörende Kolben stark ausgelenkt ist. Er spricht bei Ausfall des bei I angeschlossenen Bremskreisen an. Mittels des Schalters 7 wird ein Signal erzeugt, wenn das Bremspedal 4 bzw. der zum Kreis II gehörende Kolben um einen vorgegebenen Weg ausgelenkt ist (z.B. 50%).

An die Ausgänge bzw. Bremskreise I und II ist hier ein Doppelventil 8 angeschaltet, das aus zwei in die Kreise I und II eingeschalteten Dreiwegeventilen 8a und b und einem gemeinsamen Betätigungsmagneten 8c besteht. In der gezeigten Ruhestellung verbinden diese Ventile 8a und b die Ausgänge I und II mit Antiblockierregelventilen 9a bzw. 9b, die hier als Dreistufenventile dargestellt sind. Bei Betätigung dieser Ventile 8a und 8b mittels des Betätigungsmagneten 8c wird dagegen der Ausgang III mit den Antiblockierregelventilen 9a und b verbunden. Dem Betätigungsmagnet ist noch ein Schalter 8d zugeordnet, der in Ruhestellung Signal abgibt, dagegen nach Betätigung des Magneten 8c kein Ausgangssignal erzeugt.

Gestrichelt sind noch Rücklaufleitungen 10 eingezeichnet.

Es ist möglich, das Doppelventil 8 in zwei selbständige 3/2-Ventile aufzuspalten, die dann parallel angesteuert werden.

Figur 2 unterscheidet sich von Figur 1 lediglich dadurch, dass das Doppelventil 8 in die Antiblokkierregelventile 11a und b integriert ist, die nun als 4/4-Ventile ausgebildet sind. In der Ausgangsstellung der Ventile 11a und b sind die Bremszylinder wieder mit den Hauptbremszylindern verbunden, in der zweiten Stellung mit dem Ausgang III, in der dritten Stellung besteht keine Verbindung (Haltephase) und in der vierten Stellung sind die Bremszylinder mit den Rücklaufleitungen 10 verbunden. Die Ansteuerung der zweiten Stellung entspricht somit der Ansteuerung des Doppelventils 8 der Figur 1.

Eine Ansteuerschaltung für das Doppelventil 8 der Figur 1 bzw. die auch möglichen getrennten Ventile zeigt Figur 3. Der Betätigungsmagnet dieses Ventils ist in Figur 3 mit 12 bezeichnet, ein vorgeschalteter Verstärker mit 13. Im Beispiel der Figur 3 erfolgt eine Ansteuerung des Magneten 12, wenn ein UND-Gatter 14 ein Ausgangssignal abgibt und damit ein bistabiles Glied 15 in seine zweite Stellung setzt und ein UND-Gatter 16 nicht durch ein Sperrsignal gesperrt ist. Das Ausgangssignal des UND-Gatters 14 entsteht, wenn an der Klemme 14a ein ein Antiblockierregelventil 9 ansteuerndes Signal auftritt und gleichzeitig durch das Ausgangssignal des Schalters 7 an der Klemme 14b angezeigt wird, dass das Pedal 4 um einen vorgegebenen Weg ausgelenkt ist. Rückgesetzt wird das bistabile Glied 15, wenn das Signal des Schalters 7 wieder verschwindet, oder wenn – wie in Figur 3 gezeigt – beim Erreichen der Ruhestellung des Pedals das Signal an der Klemme 17 endet.

Bei der jetzt besprochenen Lösung wird das Ventil 8 angesteuert, sobald Blockierneigung auftritt und erst rückgesetzt, wenn der Bremsvorgang beendet ist. Damit kommt es während des genannten Zeitraums zu einer Anschaltung des von der Pedalbetätigung abhängigen Drucks an die Ventile 9. Alternativ könnte das UND-Gatter 14 auch durch ein ODER-Gatter ersetzt werden, wodurch die Umschaltung schon früher zustande käme.

Bei Integration des Ventils 8 in die Antiblockierregelventile 11 gemäss Figur 2 würde das Ausgangssignal des UND-Gatters 16 z.B. bemessen sein, dass die Ventile 11 durch es gerade in die zweite Stellung gelangen, während zum Erreichen der anderen Stellungen grössere Signale benötigt werden.

Die weiteren Schaltteile der Figur 3 dienen dazu, die Ansteuerung des Magneten 12 zu verhindern bzw. zu unterbrechen, wenn bestimmte kritische Zustände auftreten. Es wird im Ausführungsbeispiel mit Hilfe von solchen Situationen anzeigenden Signalen ein bistabiles Glied 18 gesetzt, das dann das UND-Gatter 16 sperrt und eine Warnlampe 19 einschaltet. Vorzugsweise ist das bistabile Glied nur von aussen, z.B. vom Service rücksetzbar.

Es sind hier drei Fälle gezeigt, die solche Signale erzeugen können. Einmal ein UND-Gatter 20, dem einerseits das Antiblockierregelsignal der Klemme 14a und dem andererseits über ein ODER-Gatter 21 Signale zugeführt werden, wenn entweder der Niveauschalter 5a Mangel an Bremsflüssigkeit meldet, oder der Druckschalter 2 über Stellung 2c das Unterschreiten eines Mindestdrucks meldet. Ein weiteres Ablassen von Bremsflüssigkeit zur Bremsdruckregulierung ist dann unzulässig. Mittels des UND-Gatters 22, das mit den Schaltern 6 und 7 verbunden ist, wird Kreisausfall erkannt und dann ebenfalls die Sperrung durchgeführt. Schliesslich wird mit dem UND-Gatter 23 mit invertierten Eingängen, das mit dem Schalter 7 und dem Schalter 8d verbunden ist, ein Ausgangssignal erzeugt, wenn bei nicht ausreichender Auslenkung des Pedals 4 oder entsprechenden Kolbens, also bei Ausgangssignal des Schalters 7 Null, das Nichtvorhandensein des Signals des Schalters 8d die Betätigung des Ventils 8 anzeigt. Geschieht dies, ohne dass ein Antiblockiersignal ein UND-Gatter 24 sperrt, so erfolgt wiederum Sperrung des UND-Gatters 16.

In Figur 4 ist der Speicherdruckschalter redundant ausgeführt, was bei Anwendung der Erfindung sinnvoll ist. Der Schalter 25 mit den drei Schaltstellungen a bis c entspricht dem Schalter 2 der Figur 1. In der ersten Stellung a ist die Druckmittelzufuhr durch die Pumpe abgeschaltet. In Stellung b wird der Motor 26 der Pumpe in Betrieb gesetzt und in Stellung c, in der der Motor ebenfalls eingeschaltet sein soll, wird ein Warnsignal «zu niedriger Druck» abgegeben. Ein zweiter Druckschalter 27 hat wenigstens einen Kontakt c', der bei einem etwas höheren Druck als der Kontakt c geschlossen wird. Das Signal des Ausgangs des ODER-Gatters 28 erzeugt hier das dem UND-Gatter 21 zuzuführende Signal. Das Ausgangssignal eines UND-Gatters 29, das auftritt, wenn bei Schliessen des Kontakts c der Kontakt c' noch nicht geschlossen hat, kann ebenfalls das bistabile Glied 18 sperren.

In Figur 5 ist ein Schieberventil gezeigt, wie es vorzugsweise bei der Erfindung zur Abschaltung eines Hauptbremszylinders und Anschaltung des Ausgangs III der Figur 1 verwendet werden kann. Der Elektromagnet ist mit 30, der dem Schalter 8d entsprechende Betätigungsschalter mit 31 bezeichnet. In der gezeigten Stellung sind der mit 32 bezeichnete und mit einem Hauptbremszylinder verbundene Anschluss und der mit den Antiblockierregelventilen verbundene Anschluss 33 miteinander verbunden. In der zweiten Stellung wird durch den Schieben 34 der Anschluss 32 abgetrennt und dafür die Kugel 35 abgehoben und eine Verbindung zwischen den Anschlüssen 33 und 36 hergestellt, wobei bei 36 der vom Bremsventil eingesteuerte Druck ansteht.

In Figur 6 ist mit 41 ein Bremspedal bezeichnet, das über einen Wegsimulator 42 ein Bremsventil 43 betätigt. Mit diesem Bremsventil 43 wird in einem Steuerraum 44 unter Zuhilfenahme einer Druckquelle 45 ein Steuerdruck eingesteuert, der einerseits als Bremsdruck für die an einem Ausgang 46 angeschlossenen Radbremszylinder dient und andererseits auf einen Kolben 47 eines Hauptbremszylinders 48 einwirkt, an dessen Ausgang 49 weitere Radbremszylinder angeschlossen sind, der eingesteuerte Druck wirkt über einen Kolben 50 auf das Pedal 41 zurück. Bei Ausfall der Druckquelle 45 dient dieser Kolben 50 ebenfalls als Hauptbremszylinder. An die beiden Ausgänge 46 und 49 sind jeweils zwei Bremsdrucksteuerventile 51 bis 54 angeschaltet, deren Ausgänge 51a bis 54a zu den einzelnen Radbremszylindern führen. Sie dienen zur Modulation des Bremsdrucks bei Auftreten einer Blockierneigung. Im vorliegenden Falle sind alle vier Ventile 51 bis 54 Mehrstellungsventile. Die Ventile 51, 52 und 54 sind Dreistellungsventile, die in ihren verschiedenen Stellungen in bekannter Weise einen Bremsdruckaufbau, eine Konstanthaltung des Bremsdrucks und einen Druckabbau über die gestrichelt gezeichneten Rückleitungen 56 ermöglichen. Sie werden von einer nicht gezeigten Ansteuerschaltung im Sinne einer Antiblockierregelung angesteuert.

Das Ventil 53 ist dagegen ein Vierstellungsventil (4/4 Ventil), das in seiner Ausgangsstellung (Stellung 1) den Ausgang 46 der Kammer 44 mit dem angeschalteten Radbremszylinder verbindet. Dieses Ventil übernimmt neben der Funktion des Antiblockiersteuerventils noch zusätzlich die Funktion des zusätzlichen Ventils. Hierzu ist einmal eine zusätzliche Stellung (Stellung 2) vorgesehen, in der der Steuerdruck an den Ausgang 53a angeschaltet bleibt; zusätzlich sind in dieser Stellung aber noch die Eingänge der Ventile 51 und 52 über ein Rückschlagventil 55 an den Steuerdruck angeschaltet. Der Eingang des Ventils 54 ist dauernd an diesen Steuerdruck angeschaltet. In den Stellungen 3 und 4, die eine Druckkonstanthaltung bzw. Druckerniedrigung in dem bei 53a angeschlossenen Radbremszylinder ermöglichen, wird zum anderen die Verbindung zwischen dem Ausgang 46 und den Eingängen der Ventile 51 und 52 aufrechterhalten.

Hierdurch wird erreicht, dass ein Verbrauch an Bremsflüssigkeit durch die Druckabsenkphasen keine Rückwirkung auf die Füllung des Hauptbremszylinders 48 hat.

In Figur 6 sind noch Schalter 57 und 58 zur Kontrolle der Auslenkung der Kolben 47 bzw. des Bremspedals 41 vorgesehen, wobei der Schalter 58 als Doppelschalter ausgebildet ist. Weiterhin sind noch ein Doppelschalter 45a zur Überwachung des Drucks der Druckquelle 45 und ein Fühler 59 zur Überwachung des Füllstands des Vorratsbehälters vorgesehen. Die Funktion dieser Schalter und Fühler wird im Zusammenhang mit den Schaltungen der Figuren 7 und 8 erläutert.

In Figur 7 ist der Elektromagnet des Ventils 53 mit 53b bezeichnet; er wird über den Verstärker 60 angesteuert. Zu den drei Eingängen des Verstärkers 60 werden Ansteuersignale unterschiedlicher Leistung geführt, die in Zusammenwirken mit Federn im Ventil dessen beweglichen Teil in unterschiedliche Stellungen bringen. Die unterschiedlichen Leistungen können durch unterschiedliche Ansteuerströme oder auch unterschiedlich getaktete Ansteuerströme erzielt werden.

Über die Klemmen 61 und 62 soll das Ventil in die Stellungen 3 und 4 gebracht werden. Die Steuerung in die Stellung 2 erfolgt dagegen über die Klemmen 63 oder 64, wobei der Klemme 63 ein Signal zugeführt wird, wenn und solange ein Antiblockierregelvorgang stattfindet und die Klemme 64 ein Signal erhält, wenn der Schalter 57 in Figur 6 schliesst, also angezeigt wird, dass die Bremsflüssigkeit im Hauptbremszylinder 48 erheblich abgenommen hat. Die Ansteuerung durch eines dieser Signale erfolgt über ein ODER-Gatter 65 und ein UND-Gatter 66. Durch das UND-Gatter 66 kann die Ansteuerung gesperrt werden, entweder wenn der Fühler 59 anzeigt, dass der Stand der Bremsflüssigkeit im Reservoir einen gegebenen Wert unterschritten hat (Klemme 67) oder der Schalter 45a anzeigt, dass der Druck der Druckquelle einen bestimmten Wert unterschritten hat (Klemme 68). Ausserdem kann das UND-Gatter 66 gesperrt werden, wenn der am Hauptbremszylinder angeschlossene Bremskreis ausgefallen ist. Dies wird hier durch die Schalter 57 und 58 ermittelt und zwar erfolgt die Sperrung, wenn der Schalter 57 (Klemme 69 des UND-Gatters 72) und die erste Stufe des Schalters 58 (Klemme 70) angesprochen haben, jedoch nicht die zweite Stufe des Schalters 58 (Klemme 71).

Um bei einem mehrfachen Auftreten eines den Ausfall des einen Kreises anzeigenden Signals die Sperrung des UND-Gatters bis zu einer Reparatur zu garantieren, kann man zwischen die Klemmen 73 und 74 die Schaltung der Figur 8 einfügen, bei der diese Ausfallanzeigesignale über ein ODER-Gatter 75 einem Zähler 76 zugeführt werden. Bei einer vorgegebenen Zählstellung setzt dieser Zähler einen nichtflüchtigen Speicher 77, der dann die Dauersperrung übernimmt. Die gleiche Sperrung kann auch vorgenommen werden, wenn in einem Block 78, der mit dem Mehrfachschalter 45a zusammenarbeitet erkannt wird, dass der Druck der Druckquelle schneller als mit einem vorgegebenen Gradienten abnimmt.

Oben wurde gesagt, dass das Signal am Ausgang des UND-Gatters 66 während des gesamten Regelvorgangs ansteht. Diesem Signal werden die Signale der Klemme 61 und 62 überlagert.

Im Ausführungsbeispiel der Figur 6 ist das Mehrstellungsventil 53 mit doppelter Funktion als Vierstellungsventil ausgebildet. Dieses ermöglich in der Funktion als Modulationsventil die gleichen Druckzustände wie die anderen Ventile 51, 52 und 54. Wenn man auf den Druckzustand «Konstanthalten» verzichtet, also die Stellung 3 im Ventil weglässt aber die anderen Stellungen wie beim Ventil 53 belässt, kann man auch dieses Ventil als Dreistellungsventil ausbilden.

Die Lösung der Figuren 6 bis 8 kann zur Anwendung kommen, wenn nur ein Hauptbremszylinder verwendet wird und in dem anderen Bremskreis der eingesteuerte Druck (Vordruck) als Bremsdruck verwendet wird, aber auch dann, wenn zwei (oder mehrere) Hauptbremszylinder vorgesehen sind, an die Bremskreise angeschlossen sind und deren Kolben durch den mittels des Bremsventils eingesteuerten Druck (Vordruck) betätigt werden.

## Patentansprüche

1. Hydraulisches Fahrzeugbremssystem mit Bremskraftverstärkung und Antiblockierregelung enthaltend 1. wenigstens einen geschlossenen Bremskreis mit Hauptbremszylinder, dessen Kolben von dem mittels eines pedalbetätigten Bremsdrucksteuerventils aus dem Druck einer Druckquelle abgeleiteten Vordruck beaufschlagt wird, 2. wenigstens ein Antiblockierregelventil zwischen dem wenigstens einen Hauptbremszylinder und Radbremszylindern, das bei Blockierneigung der zugehörigen Räder zwecks Regelung des Bremsdrucks betätigt wird, und 3. eine Ventilanordnung, um in bestimmten Situationen am Antiblockierregelventil eine andere Druckquelle wirksam zu machen, wobei dieser Druck der Vordruck ist und die Ansteuerung der Ventilanordnung bei einer vorgegebenen Auslenkung des Hauptzylinderkolbens oder Pedals und/oder bei Auftreten einer Blockierneigung erfolgt, dadurch gekennzeichnet, dass in die Ansteuerung der Ventilanordnung (8, 11, 12) eine bistabile Schaltung (15) eingeschaltet ist, die durch ein bei Erreichen der vorgegebenen Auslenkung erzeugtes Signal (Schalter 7) und/oder ein Blockiersignal in ihre zweite Stellung gebracht wird, in der sie die Ventilanordnung (8, 11, 12) betätigt, und die Rücksetzung des bistabilen Glieds (15) bei Erreichen der Ruhestellung des Bremspedals (4) oder Hauptzylinderkolbens erfolgt und dass ferner der Ventilanordnung (8, 11, 12) ein bei Betätigung mitbetätigter Schalter (8d) zugeordnet ist und in die Ansteuerung der Ventilanordnung (8, 11, 12) eine Sperrschaltung (16) eingeschaltet ist, die die Ansteuerung der Ventilanordnung (8, 11, 12) sperrt, wenn bei Nichtauslenkung des Pedals (4) oder Hauptbremszylinders dieser Schalter (8d) eine Betätigung der Ventilanordnung (8, 11, 12) signalisiert.

2. Fahrzeugbremssystem nach Anspruch 1, dadurch gekennzeichnet, dass in die Ansteuerung der Ventilanordnung (8, 11, 12) eine Sperrschaltung (16) eingeschaltet ist, die bei Erkennen des Ausfalls eines Bremskreises (I oder II) die Ansteuerung sperrt.

3. Fahrzeugbremssystem nach Anspruch 1, dadurch gekennzeichnet, dass in die Ansteuerung der Ventilanordnung (8, 11, 12) eine Sperrschaltung (16) eingeschaltet ist, die die Ansteuerung der Ventilanordnung (8, 11, 12) bei Unterschreiten eines vorgegebenen Druckwertes (Schalter 2c) der Druckquelle(2) sperrt.

4. Fahrzeugbremssystem nach Anspruch 1, dadurch gekennzeichnet, dass in die Ansteuerung der Ventilanordnung (8, 11, 12) eine Sperrschaltung (16) angeordnet ist, die die Ansteuerung der Ventilanordnung (8, 11, 12) bei Unterschreiten eines vorgegebenen Vorrats an Druckmittel im Vorratsbehälter (5) sperrt (Schalter 5a).

5. Fahrzeugbremssystem nach einem der Ansprüche 2 bis 4, dadurch gekennzeichnet, dass in die Ansteuerleitung für die Sperrschaltung (16) ein bistabiles Glied (18) eingeschaltet ist, das durch eines der zur Sperrung bestimmten Signale ansteuerbar ist und das nur von Hand rücksetzbar ist.

6. Fahrzeugbremssystem nach einem der Ansprüche 1 bis 5, dadurch gekennzeichnet, dass die Ventilanordnung (8, 11, 12) beim Ansprechen zusätzlich den Hauptbremszylinder von dem Antiblockierregelventil(en) trennt.

7. Fahrzeugbremssystem nach einem der Ansprüche 1 bis 6, dadurch gekennzeichnet, dass die Ventilanordnung ein 3/2-Ventil pro Bremskreis ist.

8. Fahrzeugbremssystem nach Anspruch 7, dadurch gekennzeichnet, dass bei Verwendung von zwei 3/2-Ventilen (8a und b) diese einen gemeinsamen Elektromagneten (8c) aufweisen.

9. Fahrzeugbremssystem nach einem der Ansprüche 1 bis 5, dadurch gekennzeichnet, dass die Ventilanordnung in das oder die Antiblockierregelventile (11) durch Verwendung einer weiteren Stellung und eines weiteren Anschlusses integriert sind.

10. Fahrzeugbremssystem nach einem der Ansprüche 7 bis 9, dadurch gekennzeichnet, dass die Ventile als Schieberventile ausgebildet sind (Figur 5).

11. Fahrzeugbremssystem nach Anspruch 1, dadurch gekennzeichnet, dass auch bei Verwendung von zwei Bremskreisen nur eine Ventilanordnung (43) vorgesehen ist, über die der Vordruck zusätzlich zu dem Druck des Hauptbremszylinders an die Antiblockierregelventile (51 bis 54) gelegt wird.

12. Fahrzeugbremssystem nach Anspruch 11, dadurch gekennzeichnet, dass eines (53) der Bremsdrucksteuerventile (51 bis 53) eine zusätzliche Schaltstellung aufweist und dass es derart aufgebaut und eingeschaltet ist, dass es in einer ersten ohne Antiblockierregelung eingenommenen Stellung (1) die an ihm angeschalteten Radbremszylinder mit dem zugehörigen Bremsdruck beaufschlagt, in einer zweiten Stellung (2) den Vordruck an die an ihm angeschalteten Radbremsen und an die Eingänge der anderen Bremsdrucksteuerventile (51, 52, 54) anschaltet und in einer dritten Stellung den Vordruck ebenfalls an die anderen Bremsdrucksteuerventile (51, 52, 54) anschaltet, die an ihm angeschalteten Radbremsen jedoch mit einer Auslassleitung (56) zur Druckerniedrigung verbindet.

13. Fahrzeugbremssystem nach Anspruch 12, dadurch gekennzeichnet, dass das eine Ventil (53) mit der zusätzlichen Schaltstellung eine vierte Stellung aufweist, die bei Anschaltung des Vordrucks an die anderen Bremsdrucksteuerventile (51, 52, 54) eine Druckkonstanthaltung an den an ihn angeschlossenen Radbremszylindern bewirkt.

14. Fahrzeugbremssystem nach Anspruch 12 oder 13, dadurch gekennzeichnet, dass während des Bremsens ohne Antiblockierregelung der Druck als Bremsdruck für einen Bremskreis dient (Figur 6).

15. Fahrzeugbremssystem nach einem der Ansprüche 12 bis 14, dadurch gekennzeichnet, dass das Ventil (53) einen Elektromagneten (53b) aufweist und durch unterschiedliche Ansteuerleistungen in die verschiedenen Stellungen steuerbar ist.

16. Fahrzeugbremssystem nach einem der Ansprüche 12 bis 15, dadurch gekennzeichnet, dass das Ventil (53) mit der zusätzlichen Schaltstellung zusätzlich in die zweite Stellung steuerbar ist, wenn über einen Fühler (57) eine zu starke Auslenkung des Hauptbremszylinders (47) erkannt wird.

17. Fahrzeugbremssystem nach einem der Ansprüche 12 bis 16, dadurch gekennzeicnet, dass die Ansteuerung des Ventils (53) mit der zusätzlichen Schaltstellung in die zweite Stellung mittels einer Sperrschaltung (66 und 69 bis 72) sperrbar ist, wenn Fühler (57, 58) eine zu grosse Auslenkung des Hauptbremszylinders (47) ohne eine entsprechende Auslenkung des Pedals (41) und damit einen Ausfall des ersten Bremskreises signalisieren.

18. Fahrzeugbremssystem nach einem der Ansprüche 12 bis 17, dadurch gekennzeichnet, dass die Ansteuerung des Ventils (53) mit der zusätzlichen Schaltstellung in die zweite Stellung mittels einer Sperrschaltung (66, 68) sperrbar ist, wenn der Druck einer Druckquelle (45), von der der Steuerdruck durch das Bremsventil (43) abgeleitet wird, einen vorgegebenen Wert unterschreitet.

19. Fahrzeugbremssystem nach einem der Ansprüche 12 bis 18, dadurch gekennzeichnet, dass die Ansteuerung des Ventils (53) mit der zusätzlichen Schaltstellung in die zweite Stellung mittels einer Sperrschaltung (66, 67) sperrbar ist, wenn der Vorrat an Bremsflüssigkeit einen vorgegebenen Wert unterschreitet.

20. Fahrzeugbremssystem nach Anspruch 17, dadurch gekennzeichnet, dass die Sperrschaltung (66, 69 bis 72) einen Zähler (86) und einen nicht flüchtigen Speicher (77) bei einer vorgegebenen Zahl signalisierter Ausfälle des ersten Bremskreises setzt und dieser die Sperrung bewirkt.

21. Fahrzeugbremssystem nach Anspruch 12 bis 20, dadurch gekennzeichnet, dass Fühler (45, 78) vorgesehen sind, die den Gradienten des Abfalls des Drucks der Druckquelle (45), die zur Erzeugung des Steuerdrucks dient, überwachen und bei einem zu schnellen Druckabfall ein Ansteuersignal zur Sperrung der Ansteuerung des Ventils (53) mit der zusätzlichen Schaltstellung in die zweite Stellung (42) erzeugen.

22. Fahrzeugbremssystem nach Anspruch 20 und 21, dadurch gekennzeichnet, dass das Ansteuersignal für die Sperrung dem Zähler (76) zugeführt wird.

## Claims

1. Hydraulic vehicle brake system having brake-force amplification and anti-lock regulation containing 1. at least one closed brake circuit having a main brake cylinder whose piston is acted upon by the admission pressure drawn off from the pressure of a pressure source by means of a pedal-activated brake-pressure control valve, 2. at least one anti-lock regulating valve between at least one main brake cylinder and wheel brake cylinders, which anti-lock regulating valve, where the associated wheels tend to lock, is actuated for the purpose of regulating the brake pressure, and 3. a valve arrangement for bringing another pressure source into effect in certain situations at the anti-lock regulating valve, this pressure being the admission pressure and the valve arrangement being controlled during a predetermined deflection of the main cylinder piston or pedal and/or when a tendency to lock occurs, characterized in that a bistable circuit (15) is connected into the control system of the valve arrangement (8, 11, 12), which bistable circuit (15), by a signal (switch 7), produced when the predetermined deflection is reached, and/or by a blocking signal, is moved into its second position in which it actuates the valve arrangement (8, 11, 12), and the bistable element (15) is reset when the inoperative position of the brake pedal (4) or main cylinder piston is reached, and that, furthermore, a switch (8d), which is also actuated during the actuating operation, is allocated to the valve arrangement (8, 11, 12), and a blocking circuit (16) is connected into the control system of the valve arrangement (8, 11, 12), which blocking circuit (16) blocks the control system of the valve arrangement (8, 11, 12) when this switch (8d) signals an actuation of the valve arrangement (8, 11, 12) when the pedal (4) or main brake cylinder is not deflected.

2. Vehicle brake system according to Claim 1, characterized in that connected into the control system of the valve arrangement (8, 11, 12) is a blocking circuit (16) which, when interruption in a brake circuit (I or II) is detected, blocks the control system.

3. Vehicle brake system according to Claim 1, characterized in that connected into the control system of the valve arrangement (8, 11, 12) is a blocking circuit (16) which blocks the control system of the valve arrangement (8, 11, 12) when pressure falls below a predetermined value (switch 2c) of the pressure source (2).

4. Vehicle brake system according to Claim 1, characterized in that arranged in the control system of the valve arrangement (8, 11, 12) is a blocking circuit (16) which blocks (switch 5a) the control system of the valve arrangement (8, 11, 12) when a supply of pressure medium in the supply container (5) falls below a predetermined value.

5. Vehicle brake system according to any of Claims 2 to 4, characterized in that connected into the control line for the blocking circuit (16) is a bistable element (18) which can be controlled by one of the signals intended for blocking and can only be reset manually.

6. Vehicle brake system according to any of Claims 1 to 5, characterized in that the valve arrangement (8, 11, 12) during response, additionally separates the main brake cylinder from the anti-lock regulating valve(s).

7. Vehicle brake system according to any of Claims 1 to 6, characterized in that the valve arrangement is a 3/2-valve per brake circuit.

8. Vehicle brake system according to Claim 7, characterized in that, when two 3/2-valves (8a and b) are used, they have a common electromagnet (8c).

9. Vehicle brake system according to any of Claims 1 to 5, characterized in that the valve arrangement is integrated into the anti-lock regulating valve or valves (11) by using a further position and a further connection.

10. Vehicle brake system according to any of Claims 7 to 9, characterized in that the valves are designed as slide valves (Fig. 5).

11. Vehicle brake system according to Claim 1, characterized in that, even when two brake circuits are used, only one valve arrangement (43) is provided via which the admission pressure, in addition to the pressure of the main brake cylinder, is applied to the anti-lock regulating valve (52 to 54).

12. Vehicle brake system according to Claim 11, characterized in that one (53) of the brake-pressure control valves (51 to 53) has an additional switch position and that it is constructed and connected in such a way that, in a first position (1) assumed without anti-lock regulation, it acts with the associated brake pressure on the wheel brake cylinders connected to it, in a second position (2) it connects the admission pressure to the wheel brakes connected to it and to the inlets of the other brake-pressure control valves (51, 52, 54), and in a third position it likewise connects the admission pressure to the other brake-pressure control valves (51, 52, 54) but connects the wheel brakes connected to it to an outlet line (56) for reducing pressure.

13. Vehicle brake system according to Claim 12, characterized in that the one valve (53) having the additional switch position has a fourth position which, when the admission pressure is connected to the other brake-pressure control valves (51, 52, 54), keeps the pressure constant at the wheel brake cylinders connected to it.

14. Vehicle brake system according to Claim 12 or 13, characterized in that, during braking without anti-lock regulation, the pressure acts as brake pressure for a brake circuit (Fig. 6).

15. Vehicle brake system according to any of Claims 12 to 14, characterized in that the valve (53) has an electromagnet (53b) and can be moved in a controlled manner into the various positions by different control outputs.

16. Vehicle brake system according to any of Claims 12 to 15, characterized in that the valve (53) having the additional switch position can additionally be moved in a controlled manner into the second position when excessive deflection of the main brake cylinder (47) is detected via a sensor (57).

17. Vehicle brake system according to any of Claims 12 to 16, characterized in that the controlled movement of the valve (53) having the additional switch position into the second position can be blocked by means of a blocking circuit (66 and 69 to 72) when sensors (57, 58) signal escessive deflection of the main brake cylinder (47) without a corresponding deflection of the pedal (41) and thus an interruption in the first brake circuit.

18. Vehicle brake system according to any of Claims 12 to 17, characterized in that the controlled movement of the valve (53) having the additional switch position into the second position can be blocked by means of a blocking circuit (66, 68) when the pressure of a pressure source (45), from which the control pressure is drawn off by the brake valve (43), falls below a predetermined value.

19. Vehicle brake system according to any of Claims 12 to 18, characterized in that the controlled movement of the valve (53) having the additional switch position into the second position can be blocked by means of a blocking circuit (66, 67) when the supply of brake fluid falls below a predetermined value.

20. Vehicle brake system according to Claim 17, characterized in that the blocking circuit (66, 69 to 72) sets a counter (76) and a non-transient memory (77) at a predetermined number of signalled interruptions in the first brake circuit, and this non-transient memory (77) effects the blocking.

21. Vehicle brake system according to Claim 12 to 20, characterized in that sensors (45, 78) are provided which monitor the gradient of the drop in pressure of the pressure source (45), which serves to produce the control pressure, and, if a pressure drop is too rapid, produce a control signal for blocking the controlled movement of the valve (53) having the additional switch position into the second position (42).

22. Vehicle brake system according to Claim 20 and 21, characterized in that the control signal for the blocking is fed to the counter (76).

**Revendications**

1. Installation hydraulique de frein de véhicule à amplification de la force de freinage et régulation anti-blocage comportant: 1. au moins un circuit de frein fermé avec un maître-cylindre dont le piston est sollicité par une pression préalable dérivée de la pression fournie par une source de pression par l'intermédiaire d'une vanne de commande de pression de frein actionnée par une pédale, 2. au moins une vanne de régulation anti-blocage montée entre au moins un maître-cylindre et les cylindres de frein de roue et qui est actionnée en cas de tendance au blocage des roues correspondantes pour réguler la pression de frein et 3. un dispositif à vanne pour mettre en œuvre une autre source de pression dans certaines circonstances régnant sur la vanne de régulation de blocage, cette pression étant la pression préalable et la commande du dispositif à vanne se faisant pour une course prédéterminée du piston du maître-cylindre et de la pédale et/ou en présence d'une tendance au blocage, installation caractérisée en ce que la commande du dispositif à vanne (8, 11, 12) comporte un composant bistable (15) qui, lorsque le signal engendré atteint un débattement prédéterminé (commutateur 7) et/ou en présence d'un signal de blocage est mis dans sa seconde position dans laquelle le dispositif à vanne (8, 11, 12) est actionné et le retour du composant bistable (15) se fait lorsque la pédale de frein (4) revient en position de repos ou que le piston du maître-cylindre revient en position et en ce qu'en outre, le dispositif à vanne (8, 11, 12) comporte un commutateur (8d) actionné simultanément et la commande du dispositif à vanne (8, 11, 12) comporte un circuit de blocage (16) qui bloque la commande du dispositif à vanne (8, 11, 12) si la pédale (4) n'est pas actionnée ou si le commutateur (8) du maître-cylindre signale la mise en œuvre du dispositif à vanne (8, 11, 12).

2. Installation de frein de véhicule selon la revendication 1, caractérisée en ce que la commande du dispositif à vanne (8, 11, 12) comporte un circuit de blocage (16) qui, reconnaissant la défaillance d'un circuit de frein (I, I) bloque la commande.

3. Installation de frein de véhicule selon la revendication 1, caractérisée en ce que la commande du dispositif à vanne (8, 11, 12) comporte un circuit de blocage (16) qui bloque la commande du dispositif à vanne (8, 11, 12) lors du dépassement vers le bas d'une pression prédéterminée (commutateur 2c) fournie par la source de pression (2).

4. Installation de frein de véhicule selon la revendication 1, caractérisée en ce que la commande du dispositif à vanne (8, 11, 12) comporte un circuit de blocage (16) qui bloque la commande du dispositif à vanne (8, 11, 12) lors du dépassement vers le bas d'une réserve prédéterminée de liquide de pression contenu dans le réservoir d'alimentation (5) (commutateur 5a).

5. Installation de frein de véhicule selon l'une des revendications 2 à 4, caractérisée par un composant bistable (18) monté dans la ligne de commande du circuit de blocage (16) et qui est commandé par l'un des signaux assurant le blocage et ne peut être remis à l'état initial que par une intervention manuelle.

6. Installation de frein de véhicule selon l'une des revendications 1 à 5, caractérisée en ce que, lorsqu'il est mis en œuvre, le dispositif à vanne (8, 11, 12) coupe, en outre, le maître-cylindre de la ou des vannes de régulation anti-blocage.

7. Installation de frein de véhicule selon l'une des revendications 1 à 6, caractérisée en ce que le dispositif à vanne est une vanne 3/2 pour chaque circuit de frein.

8. Installation de frein de véhicule selon la revendication 7, caractérisée en ce que, dans le cas de deux vannes 3/2 (8a et 8b) celles-ci ont un électro-aimant commun (8c).

9. Installation de frein de véhicule selon l'une des revendications 1 à 5, caractérisée en ce que le dispositif à vanne est intégré au(x) vanne(s) de régulation anti-blocage (11) gâce à une autre position ou à un autre branchement.

10. Installation de frein de véhicule selon l'une des revendications 7 à 9, caractérisée en ce que les vannes sont des vannes tiroirs (figure 5).

11. Installation de frein de véhicule selon la revendication 1, caractérisée en ce qu'également, lorsqu'on utilise deux circuits de frein, il n'est prévu qu'un dispositif à vanne (43) qui applique la pression préalable en plus de la pression du maître-cylindre aux vannes de régulation anti-blocage (51–54).

12. Installation de frein de véhicule selon la revendication 11, caractérisée en ce que l'une des vannes de commande de pression (53) (51 . . . 53) comporte une position de commutation supplémentaire et est réalisée et montée pour que, dans sa première position (1) sans régulation de blocage, les cylindres de frein de roues raccordés reçoivent la pression de frein correspondante, en ce que, dans sa seconde position (2) la pression préalable est appliquée aux freins de roues raccordés et aux entrées des autres vannes de commande de pression de frein (51, 52, 54) et en ce que, dans une troisième position, la pression préalable est également appliquée aux autres vannes de commande de pression de frein (51, 52, 54) qui relient les freins de roues raccordés à une conduite de sortie (56) pour faire chuter la pression.

13. Installation de frein de véhicule selon la revendication 12, caractérisée par une vanne (53) ayant une position de commutation complémentaire, c'est-à-dire une quatrième position dans laquelle lors de l'application de la pression préalable aux autres vannes de commande de pression de frein (51, 52, 54), cette vanne assure un maintien de la pression constante dans les cylindres de frein de roues qui lui sont raccordés.

14. Installation de frein de véhicule selon les revendications 12 ou 13, caractérisée en ce que, pendant le freinage sans régulation anti-blocage, la pression sert de pression de frein pour un circuit de frein (figure 6).

15. Installation de frein de véhicule selon l'une des revendications 12 à 14, caractérisée en ce que la vanne (53) comporte un électro-aimant (53b) et est susceptible d'être commandée par des puissances de commande différentes dans des positions différentes.

16. Installation de frein de véhicule selon l'une des revendications 12 à 15, caractérisée en ce que la vanne (53) est commandée, en outre, dans la seconde position, par la position de commutation supplémentaire si un capteur (57) détecte une course trop importante du maître-cylindre (47).

17. Installation de frein de véhicule selon l'une des revendications 12 à 16, caractérisée en ce que la commande de la vanne (53) par la position de commutation supplémentaire dans la seconde position, peut être bloquée par un circuit de blocage (66 et 69–72) si des capteurs (57, 58) détectent une course trop importante du maître-cylindre (47) sans course correspondante de la pédale (41) traduisant ainsi une défaillance du premier circuit de frein.

18. Installation de frein de véhicule selon l'une des revendications 12 à 17, caractérisée en ce que la commande de la vanne (53) par la position de commutation supplémentaire peut être bloquée dans la seconde position par un circuit de blocage (66, 68) si la pression d'une source de pression (45) dont est dérivée la pression de commande par la vanne de frein (43) passe en-dessous d'une valeur prédéterminée.

19. Installation de frein de véhicule selon l'une des revendications 12 à 18, caractérisée en ce que la commande de la vanne (53) par la position de commutation supplémentaire dans la seconde position peut être bloquée par un circuit de blocage (66, 67) si la réserve de liquide de frein passe en-dessous d'un seuil prédéterminé.

20. Installation de frein de véhicule selon la revendication 17, caractérisée en ce que le circuit de blocage (66, 69–72) met à l'état un compteur (86) et une mémoire volatile (77) qui, en cas d'état de comptage prédéterminé, signale les défaillances du premier circuit de frein et assure le blocage.

21. Installation de frein de véhicule selon les revendications 12 à 20, caractérisée par des capteurs (45, 78) qui surveillent les gradients de la chute de la pression de la source de pression (45) donnant la pression de commande et qui, en cas de chute rapide de la pression, fournissent un signal de commande pour bloquer la commande de la vanne (53) avec la position de commutation complémentaire dans la seconde position (42).

22. Installation de frein de véhicule selon les revendications 20 et 21, caractérisée en ce que le signal de commande de blocage est appliqué au compteur (76).

# FIG.1

0 110 217

# FIG. 2

11

# FIG. 3

# FIG. 4

# · FIG. 5

FIG. 6

0 110 217

FIG.7

FIG.8